# EUROPÄISCHE PATENTSCHRIFT

(11) **EP 0 792 300 B1**
(45) Veröffentlichungstag und Bekanntmachung des Hinweises auf die Patenterteilung: **03.02.1999**
(21) Anmeldenummer: 95940174.6
(22) Anmeldetag: 14.11.1995
(51) Int. Cl.: C08F 265/04, C08L 51/00

(54) **VERFAHREN ZUR HERSTELLUNG VON KAUTSCHUKMODIFIZIERTEN FORMMASSEN UNTER VERWENDUNG VON PEROXYGRUPPEN AUFWEISENDEN VERBINDUNGEN**
PROCESS FOR PRODUCING MODIFIED RUBBER MOULDING MASSES BY USING PEROXY GROUP-CONTAINING COMPOUNDS
PROCEDE DE PRODUCTION DE MASSES DE MOULAGE EN CAOUTCHOUC MODIFIE AU MOYEN DE COMPOSES CONTENANT DES GROUPES PEROXY

(30) Priorität: 14.11.1994 DE 4440674
(43) Veröffentlichungstag der Anmeldung: 03.09.1997
(73) Patentinhaber: BASF AKTIENGESELLSCHAFT, 67056 Ludwigshafen (DE)
(72) Erfinder: MC KEE, Graham, Edmund, D-67433 Neustadt (DE); MOORS, Rainer, D-76726 Germersheim (DE); HECKMANN, Walter, D-69469 Weinheim (DE); LARBIG, Harald, D-67063 Ludwigshafen (DE); ROSENAU, Bernhard, D-67434 Neustadt (DE)
(74) Vertreter: Isenbruck, Günter, Dr.
(86) Internationale Anmeldenummer: EP9504476
(87) Internationale Veröffentlichungsnummer: WO9615164

(56) Entgegenhaltungen:
- EP-A- 0 594 056
- FR-A- 2 328 004
- US-A- 4 342 676
- US-A- 4 397 992

## Beschreibung

Die Erfindung betrifft ein Verfahren zur Herstellung von kautschukmodifizierten Formmassen, insbesondere Acrylnitril-Styrol-Acrylat-Formmassen, bei dem eine Verbindung, die Peroxigruppen aufweist, verwendet wird, und nach dem Verfahren hergestellte kautschukmodifizierte Formmassen.

Kautschukmodifizierte Formmassen sind Massen, bei denen Domänen von Elastomeren, z.B. Kautschuken, in eine Matrix aus einem Thermoplasten eingebettet sind. Es besteht ein großer Bedarf an kautschukmodifizierten Formmassen, die Oberflächenglanz, Schlagzähigkeit und Reißfestigkeit aufweisen. Dabei ist die charakteristische Domänenstruktur für die erwünschten mechanischen Eigenschaften verantwortlich.

Die Mehrphasigkeit und damit auch die Domänenstruktur von kautschukmodifizierten Formmassen beruht darauf, daß diese aus verschiedenen Polymerkomponenten aufgebaut sind, die nicht oder nur teilweise miteinander mischbar sind. Die Schlagzähigkeit derselben resultiert aus einer erhöhten Energieaufnahme bei der Deformation bis zum Bruch. Die Energie wird dabei zur Bildung von Mikrohohlräumen oder zur Einleitung von Abgleitvorgängen der Matrixpolymerketten verbraucht. Die Mehrphasigkeit ist deshalb eine notwendige Voraussetzung für das Erreichen hoher Schlagzähigkeiten.

Im übrigen gilt folgendes:
1. Die zwei chemisch verschiedenen Polymerkomponenten bilden eine stabile Dispersion mit definierter Teilchengröße, die im Bereich der thermoplastischen Schmelze (Verarbeitung) weder Phasenseparation zeigt, noch bei intensiverer Temperatureinwirkung zur Homogenisierung unter Bildung einer makromolekularen Lösung neigt.
2. Zwischen den Elastomerpartikeln und der Matrix muß eine Kopplung bestehen, d. h. an den Phasengrenzflächen müssen Kräfte übertragen werden können.

Die wirkungsvollste Phasenkopplung an den Grenzflächen der Elastomerteilchen wird durch Pfropfcopolymerisation erreicht. Z. B. wird bei der Herstellung von Acrylnitril-Styrol-Acrylat-(ASA)-Formmassen in der Regel so verfahren, daß ein Acrylat-Kautschuk vorgelegt wird, auf den anschließend durch Polymerisation mit einem Monomerengemisch aus Styrol und Acrylnitril Copolymerer auf der Basis der beiden letzteren Monomeren aufgepfropft werden.

EP 0 095 919, DE 1 182 811, JA 7103 182, JA 60 21 0666, EP 0 143 991, EP 0 438 418 und B. Vollmert, Angewandte Makromolekular Chemie, 3 (1968), S. 1-27, beschrieben die Herstellung von mit Acrylat-kautschuk modifizierten Thermoplasten.

Aus der US-A-4,392,992 ist ein Verfahren zur Herstellung von kautschukmodifizierten Formmassen offenbart, bei dem mindestens ein Monomer (z.B. Styrol, Alkylmethacrylat) mittels Emulsionspolymerisationstechnik auf ein Copolymer aus Alkylacrylat und Butadien gepropft wird. Das Pfropfcopolymer wird anschließend mit einer peoxidischen Verbindung (z.B. Bis-(t-Butylperoxy)diisopropylbenzol) umgesetzt.

Davon ausgehend liegt der Erfindung die Aufgabe zugrunde, ein Verfahren zur Herstellung von kautschukmodifizierten Formmassen mit verbesserten mechanischen Eigenschaften, insbesondere erhöhter Schlagzähigkeit und Kerbschlagzähigkeit, zu schaffen.

Diese Aufgabe wird durch das erfindungsgemäße Verfahren gelöst, bei dem in einer ersten Stufe ein erstes Gemisch (A), das zumindest ein Alkylacrylat oder -methacrylat (a) der allgemeinen Formel (I) 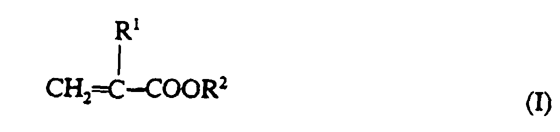 in der R¹ ein Wasserstoffatom oder eine Methylgruppe und R² eine Alkylgruppe mit 1 bis 32 Kohlenstoff-Atomen bedeutet, gegebenenfalls ein erstes, zwei oder mehr Doppelbindungen aufweisendes Monomeres (b) und gegebenenfalls ein zweites Monomeres (c) oder mehrere enthält, vorzugsweise mit freien Radikalen, zu einem Kautschuk (B), vorzugsweise in Lösung, polymerisiert wird,
in einer zweiten Stufe dem entstandenen Kautschuk (B) zur Bildung eines zweiten Gemisches (C) ein drittes Monomeres (d) oder mehrere zugesetzt wird, so dass der Kautschuk (B), ggf. unter Zugabe eines Lösungsmittels, in dem dritten Monomeren (d) gelöst oder gequollen wird, und in einer dritten Stufe das nach dem Lösen oder Quellen gebildete zweite Gemisch (C) mit freien Radikale zu der kautschukmodifizierten Formmasse (D) polymerisiert wird.

In der dritten Stufe findet dabei eine Pfropfcopolymerisation statt, wobei das Rückgrat des entstehenden Pfropfcopolymeren von dem Kautschuk (B) gebildet wird und die Pfropfäste aus dem dritten Monomeren (d) aufgebaut sind. Weil keine 100%-ige Pfropfung stattfindet, bleibt ein Teil des Kautschuks ungepfropft und es wird gleichzeitig ein Kettenpolymeres aus dem dritten Monomeren (d) gebildet, so daß in der Formmasse drei Arten von Molekülen vorliegen, nämlich Moleküle des Kautschuks (B), des Polymeren von (d) und des mit (d) gepfropften Kautschuks (B).

Während oder nach der Polymerisation der dritten Stufe wird der Ansatz mit einer Verbindung (e), die mindestens zwei Peroxigruppen aufweist, bei einer Temperatur > 120°C behandelt. Die Verbindung (e) kann zu jeder Zeit der Herstellung der Formmassen zugesetzt werden. Wird es jedoch zur Stufe 1 zugesetzt, sollten die Reaktivitäten der Peroxigruppen so gewählt werden, daß sie erst während oder nach der Polymerisation von Stufe 3 zerfallen bzw. aktiviert werden.

Die verbesserten mechanischen Eigenschaften der hergestellten Formmassen sind vor allem auf die Verwendung der Verbindung (e) zurückzuführen. Die Verbindung (e) bewirkt eine erhöhte Pfropfausbeute und damit eine bessere Kopplung des Kautschuks an die Matrix sowie einen höheren Vernetzungsgrad der Kautschukphase (s. oben). Dabei wird eine solche Verbindung (e) gewählt, die bei den Behandlungstemperaturen eine Zerfallsgeschwindigkeit aufweist, die für eine ausreichende Anzahl von sich bildenden Radikalen sorgt. Bei besonders geeigneten Verbindungen (e) liegt die Temperatur, bei der sie eine Halbwertszeit von einer Stunde aufweisen, im Bereich von 120 bis 170 °C. Beispiele für Verbindungen (e) sind Diperoxykohlensäure-tert-butylester, 2,5-Dimethyl-2,5-bis-(benzoylperoxy)-hexan, Dicyclohexylidendiperoxid, Tricyclohexylidentriperoxid, Dicyclopentylidendiperoxid, Diisopropylidendiperoxid, 2,2-Bis(tert.butylperoxy)propan, 2,2-Bis(tert-butylperoxy)butan, 1,1-Bis-(tert.-butylperoxy)-cyclohexan und 2,5-Bis-(tert.-butylperoxy)-2,5-dimethylhexan, wobei letztere Verbindung bevorzugt ist.

Beispiele für Alkylgruppen R² mit 1 bis 32 Kohlenstoffatomen sind die Methyl-, Ethyl-, n-Propyl-, iso-Propyl-, n-Butyl-, iso-Butyl-, tert.-Butyl-, n-Pentyl-, iso-Pentyl-, n-Hexyl-, n-Heptyl-, n-Octyl-, Ethylhexyl-, n-Nonyl-, n-Decyl-, n-Dodecyl-, n-Tetradecyl-, n-Hexadecyl-, n-Octadecyl-, n-Eicosyl-, n-Docosyl-, n-Tetracosyl-, n-Hexacosyl-, n-Octacosyl-, n-Triacontyl-, n-Hentriacontyl- und Dotriacontyl-Gruppe.

Gemäß einer bevorzugten Ausführungsform der Erfindung ist R² eine Alkylgruppe mit 1 bis 18 Kohlenstoffatomen.

Gemäß einen weiteren bevorzugten Ausführungsform der Erfindung weist das Gemisch (A) die folgende Zusammensetzung auf:
30 bis 100 Gew.-% des Alkylacrylats oder -methacrylats (a),
0 bis 10 Gew.-% des ersten Monomeren (b), und
0 bis 60 Gew.-% des zweiten Monomeren (c),
bevorzugte Bereiche sind:
36 bis 99,9 Gew.-% (a),
0,1 bis 4 Gew.-% (b) und
0 bis 60 Gew.-% (c),
wobei sich die Gew.-%-Angaben auf die Gesamtheit von (a), (b) und (c) beziehen.

Der Kautschuk (B) hat vorzugsweise eine Glastemperatur von weniger als 0 °C, bevorzugt weniger als -10 °C, wobei die Bestimmung der Glastemperatur mittels DSC nach ASTM 3418 erfolgt. Der Kautschuk weist damit die erforderliche Weichheit auf. Die Glastemperatur kann dabei entweder durch Verwendung eines Acrylats oder Methacrylats, dessen Polymeres die erwünschte Glastemperatur aufweist, oder durch Verwendung eines Gemisches von Acrylaten oder Methacrylaten die verschiedene Längen der Seitenketten (R², in Formel I) aufweisen, eingestellt werden. Diese Einstellung der Glastemperatur beruht darauf, daß die Glastemperatur von Acrylat- und Methacrylatpolymeren mit zunehmender Länge der Seitenkette zunächst abnimmt, dann ein Minimum durchläuft und schließlich wieder zunimmt. Das Minimum liegt bei einer Seitenkette von etwa 7 Kohlenstoffatomen für Polyacrylate und von 10 für Polymethacrylate. Dieser allgemeine Bereich für die Länge der Seitenketten R² ist daher bevorzugt.

Die hergestellte kautschukmodifizierte Formmasse (D) enthält 1 bis 60 Gew.-%, vorzugsweise 5 bis 40 Gew.-%, des Kautschuks (B). Die Obergrenze ergibt sich daraus, daß die Formmasse trotz der eingebetteten Domänen des Kautschuks eine ausreichende Festigkeit aufweisen muß. Die Untergrenze wird im wesentlichen dadurch bestimmt, daß bei der Deformation ausreichend Energie aufgenommen werden muß.

Gemäß einer weiteren bevorzugten Ausführungsform der Erfindung wird als Alkylacrylat oder -methacrylat (a) n-Butylacrylat oder Ethylhexylacrylat verwendet.

Beispiele für erste Monomere (b) sind Allylmethacrylat, Butandioldiacrylat, Divinylbenzol, Triallylcyanurat und Dihydrodicyclopentadienylacrylat, wobei Allylmethacrylat bevorzugt ist.

Beispiele für zweite Monomere (c) sind substituiertes und unsubstituiertes Styrol, Acrylnitril, Acrylsäure, Methacrylsäure, Derivate der beiden letzteren wie Acrylamid, Methacrylamid, Glycidylacrylat und Glycidylmethacrylat, Maleinsäureanhydrid, Maleinimid und Ethylen. Weitere Beispiele sind Monomere, die bei thermischer Zersetzung Radikale bildende Gruppen, wie Peroxigruppen, Diazogruppen und labile C-C-Bindungen, enthalten, z. B. tert.-Butyl-3-isopropenyl-cumyl-peroxyd oder tert.-Butylperoxycrotinat, sowie Acrylamid-Derivate wie Acrylamid-methylolmethylether, N-Methylolacrylamid, Methacrylamid-Methylolmethylether, N-Methylol-methacrylamid, Methacrylamid-N-methylolbutylether und Methacrylamid-N-methylolacetat, wobei N-Methylolmethacrylamid bevorzugt ist. Das Gemisch (A) enthält bis zu 60 Gew.-%, vorzugsweise bis zu 40 Gew.-% dieser Monomeren.

Besonders bevorzugte zweite Monomere (c) sind Styrole der Formel 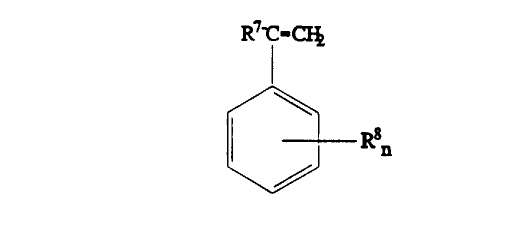 in der R⁷ und R⁸, die gleich und verschieden sein können, Wasserstoff und Alkyl mit 1-8 C-Atomen und n Werte von 0 bis 4 bedeuten, und Acrylnitril. Nach dem erfindungsgemäßen Verfahren werden demnach insbesondere ASA-Formmassen hergestellt.

In der dritten Stufe des erfindungsgemäßen Verfahrens kann die Polymerisation entweder durchgehend in Lösung oder in Masse durchgeführt werden oder nach einem Umsatz von mindestens 15% als Suspensionspolymerisation weitergeführt werden.

Der Gehalt an Acrylat-Monomereinheiten in dem Kautschuk liegt bei mindestens 30 Gew.-%, bevorzugt mindestens 60 Gew.-%, besonders bevorzugt mindestens 90 Gew.-%.

Die Polymerisation wird bei einer Temperatur von 0°C bis 200°C, bevorzugt 50°C bis 160°C durchgeführt. Alle gängigen Polymerisationsverfahren können verwendet werden, jedoch ist die Polymerisation mit freien Radikalen bevorzugt.

Die Abmischungen können Additive wie Schmiermittel, Antioxidanzien, Farbstoffe, Glasfasern und/oder Füllstoffe enthalten.

Die Kautschuke in gepfropfter Form kommen in der Formmasse als Teilchen mit einem Durchmesser zwischen 0,1 und 20 µm, bevorzugt zwischen 0,1 und 10 µm, in der Polymermatrix vor. Bevorzugt werden bi- oder trimodale Verteilungen. Die Kautschukteilchen liegen im Form von Kapseln, Stäbchen, Tropfen, Labyrinthen, Zellen, Knäueln, Schalen, Stäbchenclustern oder Tropfenclustern vor. Jedoch werden auch Teilchen, die aus mehreren kugelförmigen Teilchen bestehen, beobachtet. Bevorzugt werden Zellen oder der letztgenannte Typ. Die genannten Teilchenformen sind in A. Echte, Advances in Chemical Serials, 222, S. 29, 1989, beschrieben.

Die Erfindung wird im folgenden anhand besonders bevorzugter Ausführungsbeispiele näher beschrieben.

### Beispiele

In den Beispielen werden die folgenden Verbindungen verwendet:

Cyclohexan, n-Butylacrylat, Allylacrylat, Acrylnitril und Styrol sind Produkte der BASF und werden ohne weitere Reinigung verwendet.

Luviskol K 90® stellt ebenfalls ein Produkt der BASF dar und ist ein Polyvinylpyrrolidon mit einem K-Wert von 90, gemessen 1%-ig in Wasser bei 25 °C. Die Messung des K-Werts wird in Cellulose Chemie, 13, 1932, S. 358 bis 364, beschrieben.

Tetra-Natrium-di-phosphat wurde von der Firma Merck, Azobisisobutyronitril von der Firma Akzo Chemicals bezogen.

Als Stabilisator wurde 3-(3,5-Di-tert.-butyl-4-hydroxy-phenyl)-propionsäureoctadecylester verwendet, ein phenolisches Antioxidans, das unter der Bezeichnung Irganox 1076® von der Firma Ciba Geigy vertrieben wird.

Ertivinol® ist ein Polyvinylalkohol der Firma Ercros.

Folgende Peroxide wurden verwendet:

| | Temperatur in °C 0,1 | für t_{½} von 1 | 10h |
|---|---|---|---|
| tert-Butylperoxycrotinat (i) | 136 | 110 | 106 |
| 2,5-Bis (tert-butylperoxy)-2,5-di-methyl-hexan (ii) | 156 | 134 | 115 |
| 1,1-Bis-(tert-butylperoxy)-cyclohexan (iii) | 134 | 113 | 94 |
| Dicumylperoxid (iv) | 153 | 132 | 112 |
| Dibenzoylperoxid (v) | 111 | 91 | 73 |

### Versuch 1 (Vergleich)

### a) Kautschukherstellung

In einen Kolben wurden 1856 g Cyclohexan eingefüllt, unter Stickstoff und Rühren auf 75°C erhitzt und danach 36 ml von Zulauf 1 und 4 ml von Zulauf 2 vorgelegt. Nach 15 Minuten erfolgte die Zugabe des Restes der zwei Zuläufe innerhalb ca. 4 Stunden.
**Zulauf 1**
   641 g n-Butylacrylat
   6,09 g Allylmethacrylat
   6,4 g N-Methylol-methacrylamid
**Zulauf 2**
   42 ml Aceton
   42 ml Toluol
   699 mg 2,2'-Azobis(isobutyronitril)

### b) Herstellung des Endproduktes

In einem Rotationsverdampfer wurde unter Vakuum das Cyclohexan entfernt und gegen Styrol ausgetauscht und dann mit Acrylnitril aufgestockt, um eine Mischung aus 69,2 Gew.-% Styrol, 23 Gew.-% Acrylnitril und 7,8 Gew.-% Kautschuk zu ergeben. 1923 g dieser Lösung wurden zusammen mit 2,31 g Irganox 1076®, 1,92 g Dibenzoylperoxid und 1,35 g t-Dodecylmercaptan in einem 51-Stahlkessel eingefüllt und in einer Stickstoffatmosphäre unter Rühren auf 86°C erhitzt. Bei 35 Gew.-% Umsatz erfolgte die Zugabe von 1,7 g Dicumylperoxid, 1900 g Wasser, 20 g Luviskol K 90®, 2,0 g tetra-Natrium-di-phosphat und 59,8 g einer 10%-igen Ertivinollösung® in Wasser. Der Ansatz wurde wie folgt auspolymerisiert:
110°C für 3h
130°C für 3h
140°C für 6h.

Danach wurde gekühlt, das Polymer abfiltriert und getrocknet.

### Versuch 2 (erfindungsgemäß)

Versuch 1 wurde wiederholt, aber zusätzlich mit 5,77 g 1,1-Bis-(tert-butylperoxy)-cyclohexan in der Vorlage bei der Styrol-Acrylnitril-polymerisation.

### Versuch 3 (erfindungsgemäß)

Versuch 2 wurde wiederholt aber mit 2,5-Bis-(tert-butylperoxy)-2,5-dimethyl-hexan anstatt 1,1-Bis-(tert-butylperoxy)-cyclohexan.

### Versuch 4 (Vergleich)

### a) Kautschukherstellung

In einen Kolben wurden 1100 g Cyclohexan eingefüllt, unter Stickstoff und Rühren auf 75°C erhitzt und danach 30 ml von Zulauf 1 und 4 ml von Zulauf 2 vorgelegt. Nach 15 Minuten erfolgt die Zugabe des Restes der zwei Zuläufe innerhalb ca. 4 Stunden.
**Zulauf 1**
500 g n-Butylacrylat
4,75 ml Toluol
545 mg 2,2'Azobisisobutyronitril

### b) Herstellung des Endproduktes

In einem Rotationsverdampfer wurde unter Vakuum das Cyclohexan entfernt und gegen Styrol ausgetauscht und dann mit Acrylnitril aufgestockt, um eine Mischung aus 69,2 Gew.-% Styrol, 23 Gew.-% Acrylnitril und 7,8 Gew.-% Kautschuk zu ergeben. 1923 g dieser Lösung wurden zusammen mit 2,31 g Irganox 1076® in einen 51-Stahlkessel eingefüllt und unter Stickstoff und Rühren auf 95°C erhitzt. Bei ca. 35% Umsatz erfolgte die Zugabe von 1,7 g Dicumylperoxid, 1900 g Wasser, 20 g Luviskol K 90®, 2,0 g Tetra-Natrium-di-phosphat und 59,8 g einer 10%-igen Ertivinollösung® in Wasser. Der Ansatz wurde wie folgt auspolymerisiert:
110°C für 3h
130°C für 3h
140°C für 6h.

Danach wurde gekühlt, das Polymer abfiltriert und getrocknet.

### Versuch 5 (erfindungsgemäß)

Versuch 4 wurde wiederholt, aber es wurden 5,77 g 2,5-Bis-(tert-butylperoxy)-2,5-dimethyl-hexan zusätzlich in die Vorlage gegeben.

### Prüfung der Produkte

Die Produkte wurden zu Kleinnormstäbchen bei 240°C Schmelzetemperatur und 60°C Formtemperatur gespritzt.

An diesen Formteilen wurden die Lochkerbschlagzähigkeit nach DIN 53753-L-3-0, Ausgabe 4/81 und die Schlagzähigkeit nach DIN 53453-n, Ausgabe 5/75 gemessen.

### Ergebnisse

| Versuch | Peroxide | AN¹ | AKL² |
|---|---|---|---|
| | | kJ/m² 23°C | kJ/m² 23°C |
| 1 | (iv), (v) | 13 | 4,9 |
| 2 | (iii), (iv), (v) | 10 | 5,5 |
| 3 | (ii), (iv), (v) | 32 | 8,3 |
| 4 | (i), (iv) | 23 | 4,8 |
| 5 | (i), (ii), (iv) | 32 | 8,3 |

| | | | |
|---|---|---|---|
| 1: Schlagzähigkeit | | | |
| 2: Lochkerbschlagzähigkeit | | | |

Wie ersichtlich, führt vor allem die Zugabe von 2,5-Di-tert.-butylperoxy-2,5-dimethyl-hexan zu einer wesentlichen Verbesserung der mechanischen Eigenschaften der Formmassen.

## Patentansprüche

1. Verfahren zur Herstellung von kautschukmodifizierten Formmassen, dadurch gekennzeicbmt, daß
in einer ersten Stufe ein erstes Gemisch (A), das zumindest ein Alkylacrylat oder -methacrylat (a) der allgemeinen Formel (I) 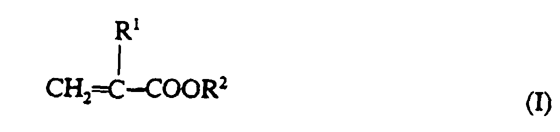
in der R¹ ein Wasserstoffatom oder eine Methylgruppe und R² eine Alkylgruppe mit 1 bis 32 Kohlenstoff-Atomen bedeutet, gegenbenenfalls ein erstes zwei oder mehr Doppelbindungen aufweisendes Monomeres (b) und gegebenenfalls auch ein zweites Monomeres (c) oder mehrere enthält, zu einem Kautschuk (B) polymerisiert wird, vorzugsweise mit freien Radikalen,
in einer zweiten Stufe dem entstandenen Kautschuk (B) zur Bildung eines zweiten Gemisches (C) ein drittes Monomer (d) oder mehrere zugesetzt werden, so daß der Kautschuk (B), gegebenenfalls unter Zugabe eines Lösungsmittels, in dem dritten Monomeren (d) gelöst oder gequollen wird,
sowie in einer dritten Stufe das gebildete zweite Gemisch (C) mit freien Radikalen zu der kautschukmodifizierten Formmasse (D) polymerisiert und das Gemisch während oder nach dieser Polymerisation mit einer Verbindung (e) die mindestens zwei Peroxigruppen aufweist, bei einer Temperatur > 120°C umgesetzt wird, wobei die hergestellte kautschukmodifizierte Formmasse (D) 1 bis 60 Gew.-% des Kautschuks (B) enthält.

2. Verfahren nach Anspruch 1, dadurch gekennzeichnet, daß R² eine Alkylgruppe mit 1 bis 18 Kohlenstoffatomen bedeutet.

3. Verfahren nach Anspruch 1 oder 2, dadurch gekennzeichnet, daß das Gemisch (A) die folgende Zusammensetzung aufweist:
30 bis 99,9 Gew.-% des Alkylacrylats oder -methacrylats (a)
0 bis 10 Gew.-% des ersten Monomeren (b) und
0 bis 60 Gew.% des zweiten Monomeren (c),
wobei alle Angaben in Gew.-% auf die Gesamtmenge des Gemisches (A) bezogen sind.

4. Verfahren nach einem der Ansprüche 1 bis 3, dadurch gekennzeichnet, daß als erstes Monomeres (b) Allylmethacrylat verwendet wird.

5. Verfahren nach einem der Ansprüche 1 bis 4, dadurch gekennzeichnet, daß als zweite Monomere (c) tert.-Butylperoxycrotonat und/oder tert.-Butyl-3-isopropenylcumylperoxid verwendet wird.

6. Verfahren nach einem der Ansprüche 1 bis 4, dadurch gekennzeichnet, daß zusätzlich als zweites Monomeres (c) N-Methylolmethacrylamid verwendet wird.

7. Verfahren nach einem der Ansprüche 1 bis 6, dadurch gekennzeichnet, daß n-Butylacrylat oder Ethylhexylacrylat als Alkylacrylat oder -methacrylat (a) verwendet wird.

8. Verfahren nach einem der Ansprüche 1 bis 7, dadurch gekennzeichnet, daß als dritte Monomere (d) Styrol und Acrylnitril verwendet werden.

9. Verfahren nach einem der Ansprüche 1 bis 8, dadurch gekennzeichnet, daß eine Verbindung (e) verwendet wird bei der die Temperatur, bei der sie eine Halbwertszeit von einer Stunde hat, im Bereich von 120°C bis 170°C liegt.

10. Verfahren nach einem der Ansprüche 1 bis 9, dadurch gekennzeichnet, daß als Verbindung (e) 2,5-Bis-(tert.-butylperoxy)-2,5-dimethylhexan verwendet wird.

11. Verfahren nach einem der Ansprüche 1 bis 10, dadurch gekennzeichnet, daß in der dritten Stufe die Polymerisation nach einem Umsatz von mindestens 15% als Suspensionspolymerisation weiter geführt wird.

12. Kautschukmodifizierte Formmasse, dadurch gekennzeichnet, daß sie nach einem der Verfahrensansprüche 1 bis 11 hergestellt ist und in einer Matrix eingebettete, Domänen bildende Teilchen des Kautschuks (B) enthält.

13. Kautschukmodifizierte Formmasse nach Anspruch 12, dadurch gekennzeichnet, daß die Kautschukteilchen in Form von Kapseln, Stäbchen, Tropfen, Labyrinthen, Zellen, Knäueln, Schalen, Stäbchenclustern oder Tropfenclustern vorliegen.

14. Kautschukmodifizierte Formmasse nach Anspruch 12 oder 13, dadurch gekennzeichnet, daß die Kautschukteilchen einen Durchmesser von 0,1 bis 20 µm aufweisen.

## Claims

1. A process for the preparation of a rubber-modified molding material, wherein
in a first stage, a first mixture (A) which contains at least one alkyl acrylate or methacrylate (a) of the formula (I) 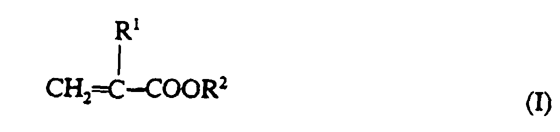
where R¹ is hydrogen or methyl and R² is alkyl of 1 to 32 carbon atoms, if required a first monomer (b) having two or more double bonds and, if required, also a second monomer (c) or a plurality thereof is polymerized, preferably with free radicals, to give a rubber (B),
in a second stage, a third monomer (d) or a plurality thereof is added to the resulting rubber (B) to form a second mixture (C), so that the rubber (B), with or without the addition of a solvent, is dissolved or swollen in the third monomer (d), and
in a third stage, the second mixture (C) formed is polymerized with free radicals to give the rubber-modified molding material (D), and the mixture is reacted at > 120°C, during or after this polymerization, with a compound (e) which contains at least two peroxy groups, the rubber-modified molding material (D) which has been prepared containing from 1 to 60% by weight of the rubber (B).

2. A process as claimed in claim 1, wherein R² is alkyl of 1 to 18 carbon atoms.

3. A process as claimed in claim 1 or 2, wherein the mixture (A) has the following composition:
from 30 to 99.9% by weight of the alkyl acrylate or methacrylate (a),
from 0 to 10% by weight of the first monomer (b) and
from 0 to 60% by weight of the second monomer (c),
all data stated in % by weight being based on the total amount of the mixture (A).

4. A process as claimed in any of claims 1 to 3, wherein allyl methacrylate is used as the first monomer (b).

5. A process as claimed in any of claims 1 to 4, wherein tert-butyl peroxycrotonate or tert-butyl 3-isopropenylcumyl peroxide is used as second monomer (c).

6. A process as claimed in any of claims 1 to 4, wherein N-methylolmethacrylamide is additionally used as second monomer (c).

7. A process as claimed in any of claims 1 to 6, wherein n-butyl acrylate or ethylhexyl acrylate is used as the alkyl acrylate or methacrylate (a).

8. A process as claimed in any of claims 1 to 7, wherein styrene and acrylonitrile are used as third monomers (d).

9. A process as claimed in any of claims 1 to 8, wherein a compound (e) whose half-life of one hour occurs in the range from 120 to 170°C is used.

10. A process as claimed in any of claims 1 to 9, wherein 2,5-bis(tert-butylperoxy)-2,5-dimethylhexane is used as compound (e).

11. A process as claimed in any of claims 1 to 10, wherein, in the third stage, the polymerization is continued as a suspension polymerization after a conversion of at least 15%.

12. A rubber-modified molding material which is prepared as claimed in any of the process claims 1 to 11 and contains domain-forming particles of the rubber (B) which are embedded in a matrix.

13. A rubber-modified molding material as claimed in claim 12, wherein the rubber particles are in the form of capsules, rods, drops, labyrinths, cells, coils, shells, rod clusters or drop clusters.

14. A rubber-modified molding material as claimed in claim 12 or 13, wherein the rubber particles have a diameter of from 0.1 to 20 µm.

## Revendications

1. Procédé de fabrication de masses à mouler modifiées par du caoutchouc,
caractérisée en ce que
au cours d'une première étape, on polymérise un mélange (A) qui contient au moins un acrylate ou méthacrylate d'alkyle (a) de la formule générale (I) : 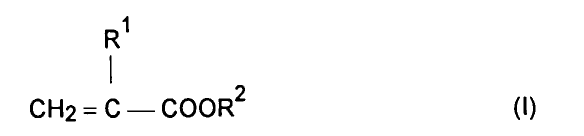
dans laquelle R¹ représente un atome d'hydrogène ou le radical méthyle et R² représente un radical alkyle comportant de 1 à 32 atomes de carbone, éventuellement un premier monomère présentant deux ou plus de deux doubles liaisons (b) et éventuellement aussi un second monomère (c) ou plusieurs seconds monomères (c), de manière à obtenir un caoutchouc (B), de préférence, avec des radicaux libres,
au cours d'une seconde étape, on ajoute au caoutchouc formé (B) en vue de la formation d'un second mélange (C), un troisième monomère (d) ou plusieurs troisièmes monomères (d), si bien que le caoutchouc (B) se dissous ou gonfle, éventuellement sous addition d'un solvant, dans le troisième monomère (d),
tout comme, au cours d'une troisième étape, on polymérise le second mélange formé (C) avec des radicaux libres en une masse à mouler modifiée par du caoutchouc (D) et on fait réagir le mélange au cours de ou après cette polymérisation avec un composé (e) qui présente au moins deux radicaux peroxy, à une température supérieure à 120°C, où la masse à mouler modifiée par du caoutchouc (D) ainsi fabriquée contient de 1 à 60% en poids du caoutchouc (B).

2. Procédé suivant la revendication 1, caractérisé en ce que R² représente un radical alkyle qui comporte de 1 à 18 atomes de carbone.

3. Procédé suivant la revendication 1 ou 2, caractérisé en ce que le mélange (A) présente la composition suivante :
30 à 99,9% en poids de l'acrylate ou du méthacrylate d'alkyle (a),
0 à 10% en poids du premier monomère (b), et
0 à 60% en poids du second monomère (c),
où toutes les indications en pourcentages pondéraux se rapportent à la quantité totale du mélange (A).

4. Procédé suivant l'une quelconque des revendications 1 à 3, caractérisé en ce que l'on utilise du méthacrylate d'allyle à titre de premier monomère (b).

5. Procédé suivant l'une quelconque des revendications 1 à 4, caractérisé en ce que l'on utilise le peroxycrotonate de tert-butyle et/ou le peroxyde de tert-butyl-3-isopropénylcumyle à titre de second monomère (c).

6. Procédé suivant l'une quelconque des revendications 1 à 4, caractérisé en ce que l'on utilise le N-méthylolméthacrylamide à titre de second monomère (c).

7. Procédé suivant l'une quelconque des revendications 1 à 6, caractérisé en ce que l'on utilise l'acrylate de n-butyle, ou l'acrylate d'éthylhexyle, à titre d'acrylate d'alkyle ou de méthacrylate d'alkyle (a).

8. Procédé suivant l'une quelconque des revendications 1 à 7, caractérisé en ce que l'on utilise le styrène et l'acrylonitrile à titre de troisièmes monomères (d).

9. Procédé suivant l'une quelconque des revendications 1 à 8, caractérisé en ce que l'on utilise un composé (e) dans le cas duquel la température à laquelle ce composé possède une durée de demi-vie d'une heure, se situe dans la plage de 120°C à 170°C.

10. Procédé suivant l'une quelconque des revendications 1 à 9, caractérisé en ce que l'on utilise le 2,5-bis-(tert-butylperoxy)-2,5-diméthylhexane à titre de composé (e).

11. Procédé suivant l'une quelconque des revendications 1 à 10, caractérisé en ce que, au cours de la troisième étape, on poursuit la polymérisation, après une conversion d'au moins 15%, sous forme de polymérisation en suspension.

12. Masse à mouler modifiée par du caoutchouc, qui se caractérise en ce qu'elle est fabriquée suivant l'une quelconque des revendications 1 à 11 et contient des particules formant des domaines du caoutchouc (B) noyées dans une matrice.

13. Masse à mouler modifiée par du caoutchouc suivant la revendication 12, caractérisée en ce que les particules de caoutchouc se présentent sous la forme de capsules, de bâtonnets, de gouttes, de labyrinthes, de cellules, de pelotes, de cuvettes, d'amas de bâtonnets ou d'amas de gouttes.

14. Masse à mouler modifiée par du caoutchouc suivant la revendication 12 ou 13, caractérisée en ce que les particules de caoutchouc présentent un diamètre de 0,1 à 20 µm.
